Europäisches Patentamt

European Patent Office

Office européen des brevets

(11) Publication number: **0 432 667 A2**

# EUROPEAN PATENT APPLICATION

(21) Application number: 90123576.2

(22) Date of filing: 24.02.88

(51) Int. Cl.5 **G01G 13/18, B65D 90 66**

This application was filed on 07 - 12 - 1990 as a divisional application to the application mentioned under INID code 60.

(30) Priority: 27.02.87 ES 8700794
27.02.87 ES 8700939 U

(43) Date of publication of application:
**19.06.91 Bulletin 91/25**

(60) Publication number of the earlier application in accordance with Art.76 EPC: **0 280 283**

(84) Designated Contracting States:

AT BE CH DE FR GB GR IT LI LU NL SE

(71) Applicant: **TALLERES DAUMAR S.A.**
Wifredo 796
Badalona (Barcelona)(ES)

(72) Inventor: **Guardiola, Agustin Dauder**
Wifredo 796
Badalona (Barcelona)(ES)

(74) Representative: **Körner, Ekkehard, Dipl.-Ing.**
Patentanwalt Maximilianstrasse 58
W-8000 München 22(DE)

(54) **Automatic discharge trough for a weighing machine.**

(57) Automatic weighing machine for food products, comprising a frame, machine operating means, product feeding means, weighing menas, temporary storing areas having means for discharging onto another means ducting the product towards the machine exit, and a programmer processing unit which controls, activates and regulates the machine operation, the product feeding means discharge the product onto a series of troughs circularly arranged and linked to respective weighing means mounted on a horizontal platform rotating with respect to a central vertical axis, the product of each trough being discharged onto a stationary storage area of a series of them until the programmer processing unit orders the selective discharge of a corresponding storage area when a batch of product units stored there has attained the predetermined weight. Each trough has at least one of its side walls pivotally mounted on a first essentially horizontal axis extending approximately radially and supported at both ends, the rear of which is mounted at a piece of "C" shaped verival section, to which wall is connected by its rear part an overhanging second axis essentially horizontal and protruding into said "C" shaped piece. Said second axis is hinged to a link hinged to a piece displaceable along a vertical guide rod fixed to the "C" shaped piece and traversing the displaceable piece which is operated by means of the machine with the aid of a free wheel. The closed trough position is obtained when the displaceable piece is in its lower position, whereas the open trough position is obtained when said displaceable piece is in its upper position.

EP 0 432 667 A2

FIG. 5

The present invention relates to an automatic weighing machine for food products, and in particular to an automatic discharge trough for an automatic weighing machine.

There are known weighing machines for fruit, comprising a relatively high number, for example, ten to fourteen, of containers that are supplied with the products to be weighed, from a common single entry, and that are correlatedly discharged. Said known weighing machines comprise an electronic computer unit making the calculation of the possible combinations of the weights of the products stored in said containers and selecting those containers the sum of weights of which, i.e. the total weight thereof is most approximate to the desired weight, ordering their discharge by an exit conveyor provided in said machine. The strategy corresponds to the called "associative weighing" in which the product passes by several weighing points, and an electronic computer looks for a combination, the total actual value of which is closest to the nominal desired weight.

There is also known a kind of automatic weighing machine, with the intervention of an electronic processing unit in which, among other characteristics, which effects the individual weighing of the products and their conveyance to respective storage areas, said products being discharged by another transport means, usually in order to supply a packaging machine, when in the respective storage areas a batch of products of predetermined and regulable weight with a determinated tolerance also regulable by the user is contained. Such machine is known from ES-C-500.951, and the same is weighing each unit of product entering the machine, and the weighed unit/s is or are directed to the respective storage area/s, so that the programmer processing unit knows permanently the actual weight of the product weighed existing in all and each of the storage areas, in addition to being known the actual weight of the product that is entering the machine as the product is being weighed in the latter. When said weight of the storage areas, specifically the weight of the products stored in a respective storage area, approaches the prefixed nominal weight (with its upper and lower limits or tolerances also determined) looks for, chooses and orders to send to said storage area other product units, the actual weight of which permits to complete a batch of product units with said prefixed final weight, which batch will be next discharged from said storage area over the transport means arranged underneath the storage area, directing said batch towards the machine exit , in order to deliver it to the packaging machine. The referred strategy corresponds to the called "accumulative weighing" and in the same way the programmer processing unit takes in account, permanently, the actual weights of the batches of products that are temporarily stored in all storage areas of the weighing machine, and mathematically combines them with the actual weights of product units, as the latter are weighed. In this manner a higher production is obtained , by time unit, of batches of product units with a predetermined final weight, and also a lower number of rejected units is obtained as compared to the weighing machines known previously to the application date of the Spanish Patent Nr. 500.951.

The automatic weighing machine explained herein utilizes this strategy. The machine corresponds to the type of machines that comprise a support structure or frame of the machine members, actuating means for these members, feeding means of the corresponding product, means for weighing it, storage areas for storing it, and means for discharging it by other means for directing it towards the machine exit, and a programmer processing unit which registers the actual weight of the products that in each moment are contained in all and each of the temporary storage areas. When the weight of the product units contained in a corresponding storage area reaches a value prefixed by the machine user, the programmer processing unit orders the discharge of the batch of product units with said final prefixed weight, there being arranged suitable connection means between said programmer processing unit and the respective machine members, and conventional drive, control and safety means and the like of the machine.

The automatic weighing machine for food products of the invention comprises,prefarably a hopper, a channel and at least an endless belt conveyer the end of which extends above a series of troughs, open in their upper part in order to receive the product being discharged from said conveyer, circularly arranged and connected, respectively and in overhung arrangement, to corresponding means for weighing radially aligned and closer to the center than to said troughs, said means for weighing being connected with the programmer processing unit and mounted on a horizontal platform rotating, through suitable means, with respect to a central vertical axis. Said troughs have at least one of their walls movable, operated by suitable means actuated by the programmer processing unit. Underneath said troughs, a series of fixed storage areas is provided, open in their upper part in order to receive the corresponding product already weighed and with at least one of their walls movable, also operated by suitable means actuated by the programmer processing unit , in order to allow the discharge of each batch of product units of a final predetermined weight, said discharge being effected onto the means for carrying said batches of product towards the machine exit.

The automatic weighing machine for food products of the present invention has, among others, the following advantages, namely, adaptability to a very wide variety of products (peppers, onions, garlics, potatoes, citrics sprouts, apples, nuts, beans and, in general, food products of various sizes), a high cadence production, with a minimum rejection without the risk of fortuitous damage to the initially rejected product due that the same does not exist from its corresponding trough, and a greater regularity in the weight of the obtained batches, with a selfregulation of the supply, according to the final size of the batches of product to be obtained.

The automatic weighing machine for food products according to this description offers the previously described advantages apart from others that will be derived from the exemplary embodiment of said machine, which is described in detail subsequently, in order to facilitate the understanding of the above referred characteristics, explaining at the same time various details and accompanying, in order if this, a set of drawings in which, only by title of example without limitation of the scope of this invention, is represented an embodiment of the automatic weighing machine of the invention.

In the drawings:

Figure 1 shows an embodiment of the weighing machine in a side elevation view corresponding to a position in which the entry of the machine is arranged towards the observer, said machine presenting several sectioned parts for a better information;

Figure 2 is an upper plan view of the machine according to the figure 1, with the feeding assembly and the rotatable platform provided with troughs;

Figure 3 shows an elevation view of the machine in a position in which its exit is orientated towards the observer, with the feeding assembly;

Figure 4 corresponds to an upper plan view in the position represented in figure 3, but in which the rotating platform with the troughs are omitted, whereas the stationary storage areas are visible;

Figure 5 represents an automatic discharging trough in side elevation view, with sectioned parts and showing schematically its mounting in a weighing machine (not illustrated);

Figure 6 is a front elevation view considered from the outer part of the trough according to figure 1;

Figure 7 corresponds to a plan view of the trough according to figure 1, and

Figures 8 and 9 represent, respectively, elevation views of the mechanism for actuating the side walls of the trough, in opened position (for the discharge of the contained product) and in closed position (in order to be able to retain product).

According to the drawings, the automatic weighing machine for food products comprises a frame 1 for the support and attachment of the several members of the machine, said frame 1 allowing the support on the floor. It is understood that the frame 1 corresponds also to the high or elevated part of the machine, particularly the upper structure of the same which presents, among other members, cams for automatically effect closing and opening of the troughs during their rotation.

In the entry of the machine there are arranged feeding means for the product, actuated by the programmer processing unit in a form that will be described further on. Said feeding means comprises, in the exemplary case and preferably, a hopper 2 for charging the product to be weighed, and a channel 3 provided with a lift conveyor, extending from the bottom of said hopper and routing the product to an endless belt 4 in a horizontal position in this case, the free end of which i.e. the distal end with respect to the channel 3 terminates above a series of troughs 5. The endless belt 4 is arranged between two walls that canalizes the product during its transport from the hopper 2 to said free end. The hopper 2 and the channel 3 along with their lift conveyor are mounted so that their inclination can be varied: for example by means of a device 6 connected to the frame 1 of the machine and to the frame of the hopper2and the channel 3 assembly. Likewise said lift conveyor and said endless belt 4 are syncronously operated by a mechanical transmission 7 ( that also could be electric, or actuated by other conventional drive), which in turn is operated by an electric motor 8, in this case trough a reductor. It is obvious that it is utilizable other type of motor.

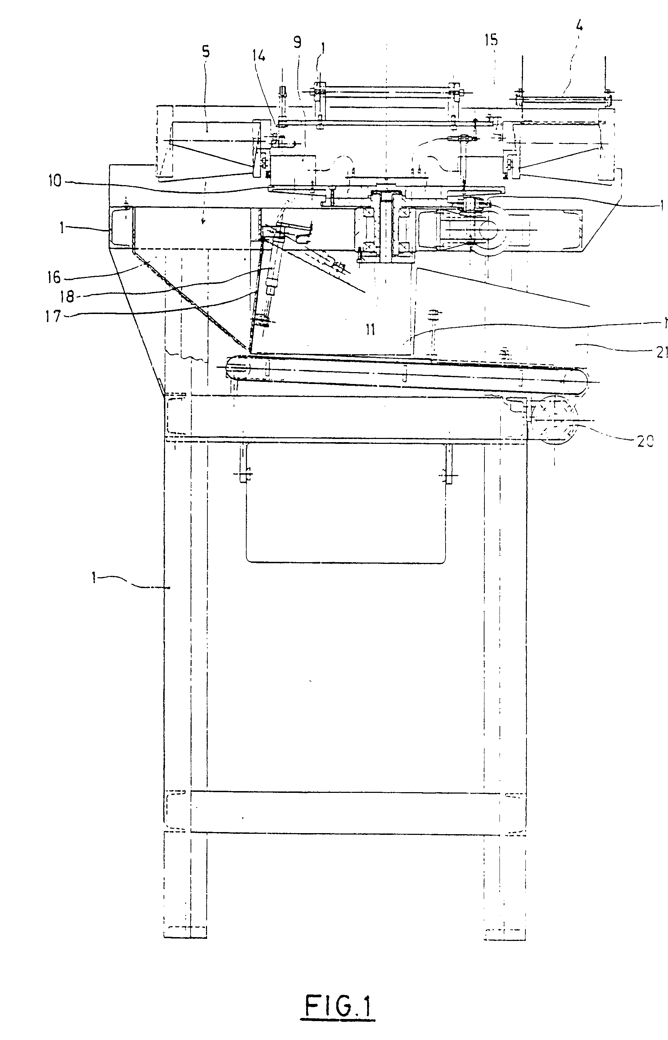

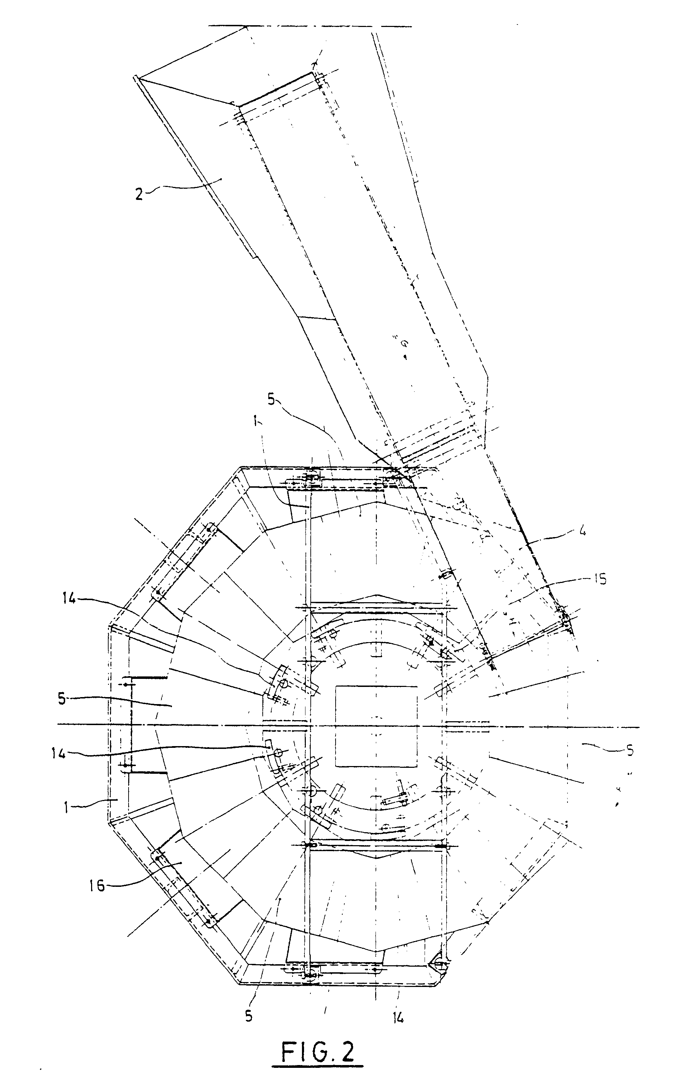

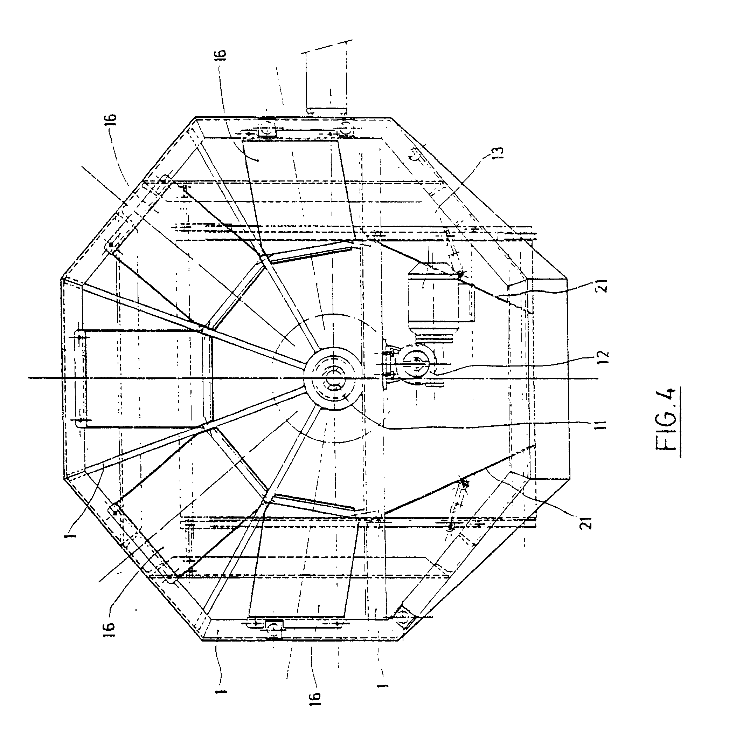

The series of troughs 5 comprises, in the present example, twelve circularly arranged (see particularly figures 2 and 1) troughs 5 and each of them is connected in a overhanging form, to a corresponding weighing means 9. Said means 9 may be a transducer or other suitable type of charging cell. In the present example twelve weighing means 9 are radially aligned with said troughs 5 but are arranged closer of the center of the rotational axis of the assembly than said troughs 5. The weighing means 9 are mounted, if desired in an adjustable position, on a platform 10, horizontally arranged and rotatable in a vertical axis, to which end the platform 10 is mounted on a guide and support means 11, allowing a gentle rotation of the same, said platform 10 being operated through a transmission means 12 by an electric motor 13, in the present case provided with a reductor or similar, it being also possible to utilize other type of conventional motor. Figure 4 shows in detail the mounting of said electric motor 13, the structured part of the frame 1 and a part of said support means 11.

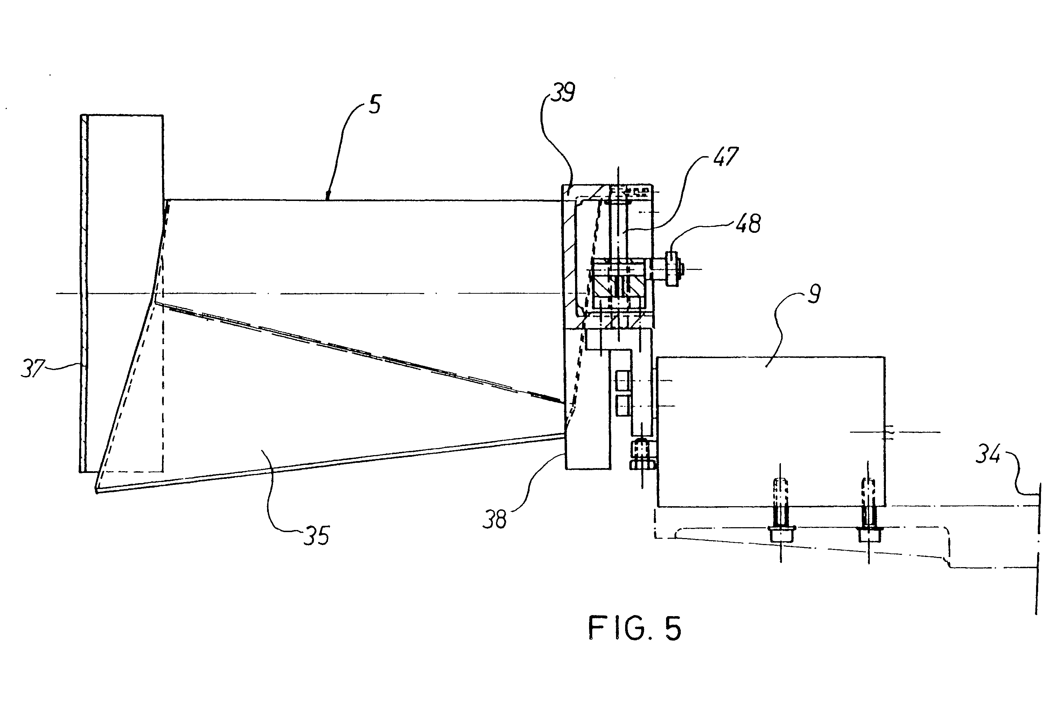

The troughs 5 each are open in their upper part, in order to receive the products delivered by the endless belt 4, which products proceed from the hopper 2. Each trough has at least one of its walls movable, operated by suitable means actuated by the programmer processing unit incorporated in the described weighing machine, and in the present case the movable walls of the troughs 5 are operated by controllable mechanical means, formed by cams 14 and 15, actuating over the complementary means 48 (Fig. 5) of the troughs 5, so that, as a whole and assuming that the platform 10 rotates clockwise according to the arrow F in figure 2, the movable walls are compelled to be closed by cam 15, before the respective trough 5 passes under the endless belt 4 in order to receive the product discharged by same, being immediately effected the corresponding weighing of the product contained in the pertinent trough, after which the movable wall/s of the same will be operated so that they are opened, according to the programmer processing unit, in order to discharge into a corresponding temporary storage area to be described in the following. The cams 14 are displacable by means actuated by the programmer processing unit, in order to place them selectively in their active or in their inactive position, in which first case the discharge of the corresponding trough into a storage area selected by said programmer processing unit is caused. Due to the described correspondence, there are as many cams 14 as storage areas.

Underneath the troughs 5 there are stationary storage areas 16 attached to the frame 1 of the weighing machine, and in this example there are arranged five storage areas. Said storage areas 16 are open in their upper part in order to receive the already weighed product, proceeding from a trough 5 that in that moment circulates above said storage area and that, according to the corresponding order given by the programmer processing unit and through suitable means, effects opening of the movable wall/s of said trough, which thus discharges the product contained in same into said storage area. Each storage area 16 for temporary storing the product has at least one of its walls 17 movably secured thereto, which is operated by means of a pneumatic cylinder 18 that maintains it in closed position, when its rod is in extended condition, or opens and maintains it in its opened position, when its rod is in retracted condition, as is represented in figure 1, in which is seen that pivoting of the cylinder, through a suitable regulable device, actuates a switch, to detect the cylinder position and to limit the corresponding opening angle, being operated by the actuation of the cylinder 18 in turn actuated by the programmer processing unit, in order to discharge the corresponding batch of the product from the storage area in that location, with the weight and limits of the same predetermined and regulated by the machine user.

Discharge of each batch of product units from the corresponding fixed storage area 16 is effected onto an endless belt 19, that is operated by an electric motor 20 and through an associated transmission, in order to direct the referred weighed batches of product to the machine exit. The electric motor can be replaced by another type of conventional motor.

It is obvious that the endless belt 19 and the motor 20, with its associated transmission could be replaced by a simple inclined ramp, in order to facilitate the exit of the referred batches away from the machine, it being possible to utilize other known means to obtain the conveyance or the simple displacement of said batches of product outside of the machine, e.g. in order to supply another machine, in particular a packaging machine.

In order to obtain a better canalization of the batches of product units already weighed, it is possible to arrange two screens 21 orientatable by known means. Some kind of funnel may be useful as well with said purpose, specially in order to direct the batches of product units to the packaging machine that usually follows the weighing machine.

The cylinders 18 can be pneumatic, hydraulic and also can be replaced by mechanical, electric or electromechanical, since the stresses to be exerted or supported by said means to operate the movable wall 17 of each storage area 16 are relatively small.

In the zone corresponding to the charging of the troughs 5, i.e. to the discharge or exit of the endless belt 4 may be arranged a track in the form of an arch of circumferences, for the bearing of, for example, free wheels affixed to the inner part of the troughs, in order to avoid an overload of the means for weighing 9 the moment the product falls on the corresponding trough.

The endless belt 4 can be disposed forming a certain angle with the horizontal, apart from this latter position, that is represented in the example being described.

It is convenient that the weighing of each trough 5 with the product contained in the same be effected after a certain period of time starting from the discharge in the trough from the endless belt of the product in order to stabilize it and thus attain an exact weight in the associated charging cell 9. To this end a position sensor, as a microswitch, may be provided, the angular displacement of which in relation to the vertical plane is adjustable in order to achieve a correct weighing. When the troughs 5 do not yet contain products the calibration of the same is effected, thereby providing information on the tare and the weight of the trough with the corresponding product to the programmer processing unit, whenever there is any variation in these data and in a periodic manner in either case. The cited programmer processing unit operates the driving means of the lift conveyor of the hopper 2 and the endless belt 4, which driving means are variable and regulable in speed, so that the supply speed of the machine is adapted to the type of product and the quantity or weight desired for the final batch of the same, thus obtaining a selfregulation of the supply, with a regular cadence of this supply and, in consequence, of the operation of the weighing machine.

It seems convenient, also because of the economy of the driving means to be utilized, that the rotating speed of the platform 10 be constant, although it would also be convenient that said speed should be regulable.

The command for opening the wall/s of the troughs 5 is effected by the programmer processing unit which decides, according to the strategy to be followed for the same and with the information that it permanently receives in accordance with the referred to above, in which storage areas 16 the corresponding trough 5 should discharge the product actually contained therein, and each storage area is also actuated by the cited programmer processing unit, through the driving means of the movable wall of same, in order to discharge the batch of product of predetermined weight actually contained in the corresponding storage area.

In the event of the product being rejected, because it cannot be combined with the products temporarily stored in the storage areas 16 (which has very small probability in this weighing machine) the trough 5 circulates under the discharge zone of the endless belt 4 without effecting the corresponding discharge, because it is disabled according to the corresponding order given by the programmer processing unit under this condition, so that said trough continues moving around until the programmer processing unit in this second turn of said product contained in said trough arrives to be allowed to be discharged in a storage area 16, thus being eliminated the recirculation of the rejected product until the entry of feeding in the machine, and being in this manner the product softer treated than in the known machines.

The weighing machine described and the following packaging machine will be related in normal line of packaging, by means, for example, of an electric signal or other conventional means, in order to adapt the operation and standstill times of both machines and thus obtain a convenient coupling, maximizing its overall performance.

The data transmission, proceeding from the means and devices mounted in the platform 10 or related with the same to the programmer processing unit, can be made by means of infrared rays, optical fibres or by other convenient means, and the electric power supply to the weighing means 9 (charge cells or transducer, etc.) can be effected by mechanical, electrical or other means, including electrical induction, i.e. without cables, thus allowing a higher reliability of said transmission and feeding, and a higher security in the same, particularly taking in account that the linkage should be effected through parts and members relatively rotatable.

In the drawings there are not represented the electric, pneumatic or other fluid connection means, which are utilized in the machine for connecting the several driving devices of the same with, for example, the compressed air equipment and through electrovalves and other accessories for its control and driven by the programmer processing unit, that none of them represented, comprising the concerned machine conventional driving, control and safety means, likewise for other specific functions desired.

The weighing machine may have protection covers and shells for the user and its complete finishing, that can be totally or partially removable in order to provide access to the inner members of the machine.

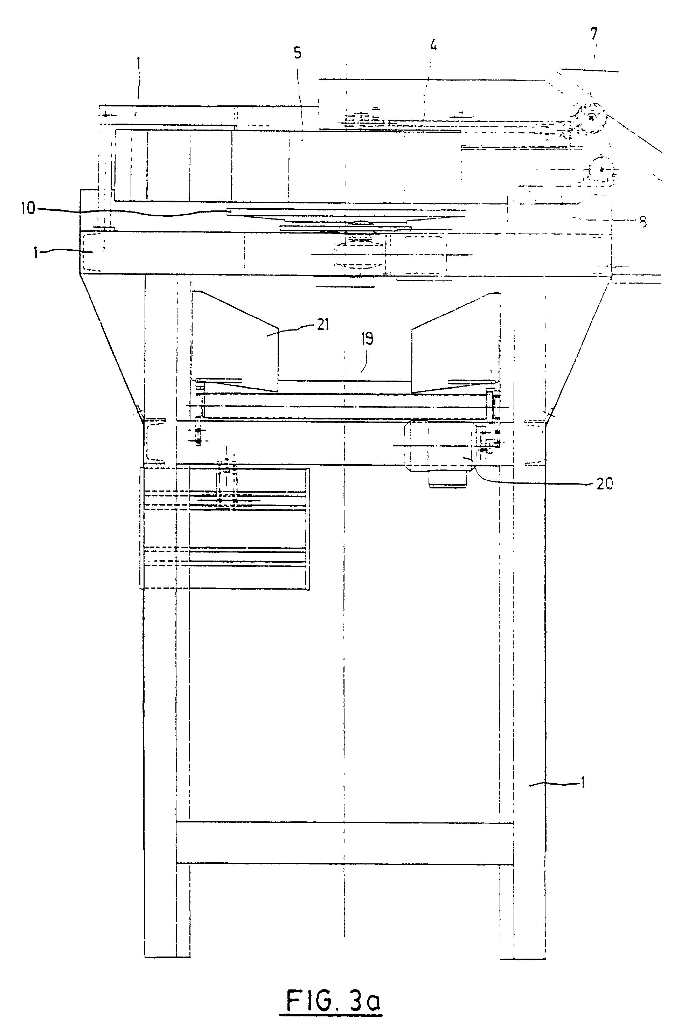

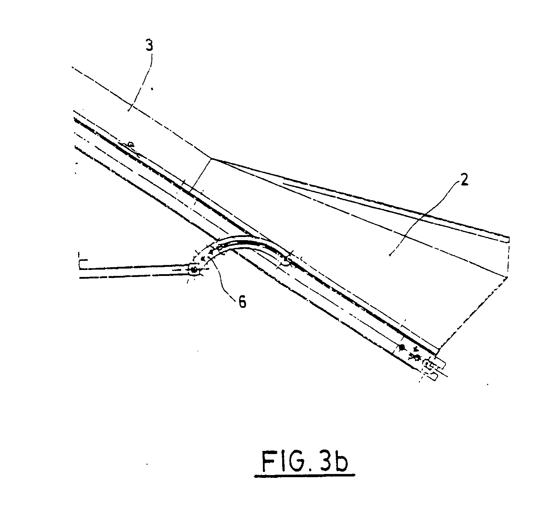

The operation of this weighing machine is practically derived until now and represented in the drawings. The operation may be summarized in the following manner: the product disposed in the hopper 2 is directed, in the sense of the arrow G, by the lift conveyor by the channnel 3 to the endless belt 4, which continues carrying it according to the arrow H (see figures 2 and 3), and the units of said product conveyed in the detailed form are discharged from the end of the endless belt conveyor distal of the hopper 2, falling into a corresponding trough 5 that, in each moment, passes under said end of the endless belt conveyor, while the platform rotates with the troughs and its respective weighing means 9 according to the arrow F (Figure 2), and the means for supplying the units of the products to the entry of the machine being actuated by the programmer processing unit. Each trough 5 that receives the corresponding units of the product in the described way , continues displacing according to the described circular movement, during a part of which the weiyhing of same with the product contained therein takes place; subsequently, in its rotational circular movement the actuation of its wall/s is effected to discharge the product into a corresponding storage area 16, when it is ordered by the programmer processing unit, which determines the storage area into which shall be effected said discharge of each trough 5 and taking place the opening of the walls of said troughs by means of the correspondent actuation of one of the cams 14, that activates the corresponding device for the discharge of the product contained in a trough into a storage area selected by the programmer processing unit. Continuing the rotation of the troughs, when the same approach further to the commencement of the departure point described, i.e., to the discharging zone of the endless belt 4, another cam 15 effects the closure, in its case, of the movable walls of the troughs, which thus are further arranged to receive new units of product conveyed from the hopper 2, repeating the described cycle.

Each time a batch of product units with the desired final weight is obtained in a storage area, (and that has been regulated by the same user, with the tolerances also desired thereby), the programmer processing unit produces the activation of means so that the pneumatic cylinder 18 that effects opening of the movable wall 17 of the corresponding storage area 16, thus discharges said batch onto that endless belt 19 that directs said batch of product towards the exit of the weighing machine, and this process is repeated as many times as batches are comprised in each storage area 16.

Summarizing, it results that the machine operates in continued form in the rotation of the assembly formed by the pairs of trough 5 and weighing means 9, whereas the means for supplying the product in the entry in the machine, formed by the hopper 2 with its lift conveyor, the channel 3 and the endless belt 4 are actuated by the programmer processing unit, thus determining a selfregulation of the feeding and, in the case in that the product units disposed in one of the troughs 5 should be rejected (because they have an unsuitable weight for the strategy followed by the programmer processing unit, whereby said product units are not selected to be discharged onto any of the storage areas 16) said trough with rejected product is not actuated for its discharge and continues conveying said rejected product units under the exit of the endless belt 4 another turn, which endless belt in that moment is stopped, by a corresponding order of the programmer sprocessing unit, in order not to discharge additional product units into said trough already charged in the anterior turn, said trough prosecuting the new cycle, in order to his eventual selection for discharging the product contained in the same onto a corresponding storage area 16.

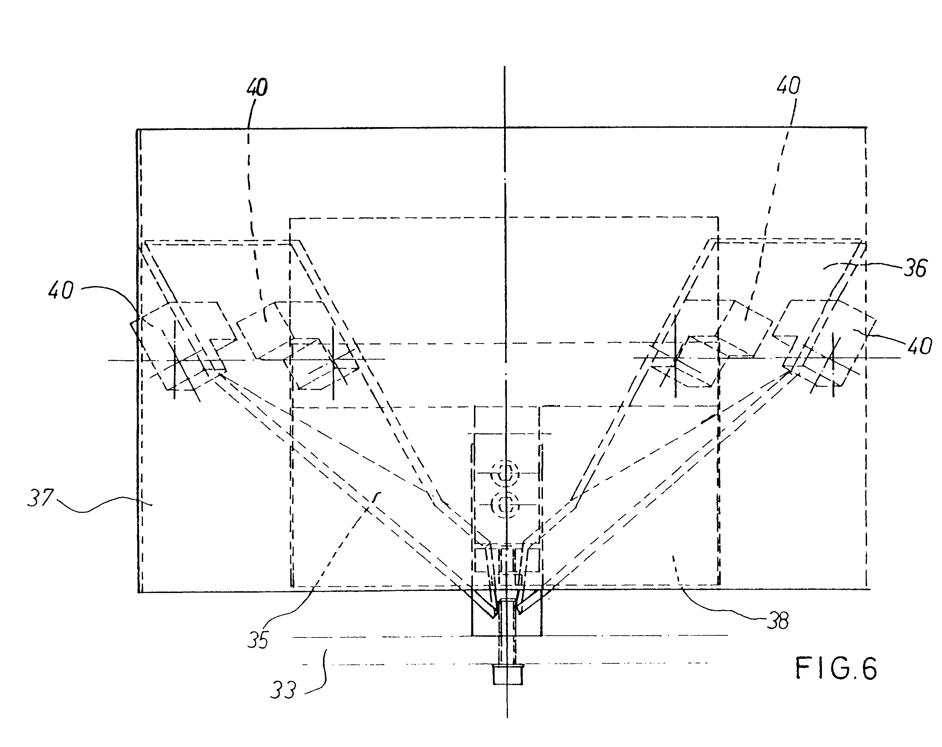

Reference is now made to Figures 5 to 9 of the drawings in which details of an automatic discharge trough 5 of the weighing machine are shown.

According to Fig. 5, the automatic discharge trough is fixed to the respecive weighing means 9, which is mounted on the platform 10, on which are arranged a plurality of similar pairs of troughs and weighing means, said pairs being arranged circularly and on a horizontal plane, and rotating together in relation to a vertical central axis 34 of the weighing machine in which are disposed said troughs 5.

At each trough 5 at least one of its two side walls is pivotally mounted, and in this example its two side walls 35 and 36 are pivotally mounted, each of said walls having a broken shape as is illustrated in the drawings.

The trough 5 comprises, in addition to said side walls 35 and 36, an external and an internal wall 37 and 38 respectively, the latter being connected, in this example, to a piece having a "C" shaped vertical section 39 which, considered in plan view (figure 3), presents the shape of a very obtuse angle which sides are parallel to the sides of the wall 37.

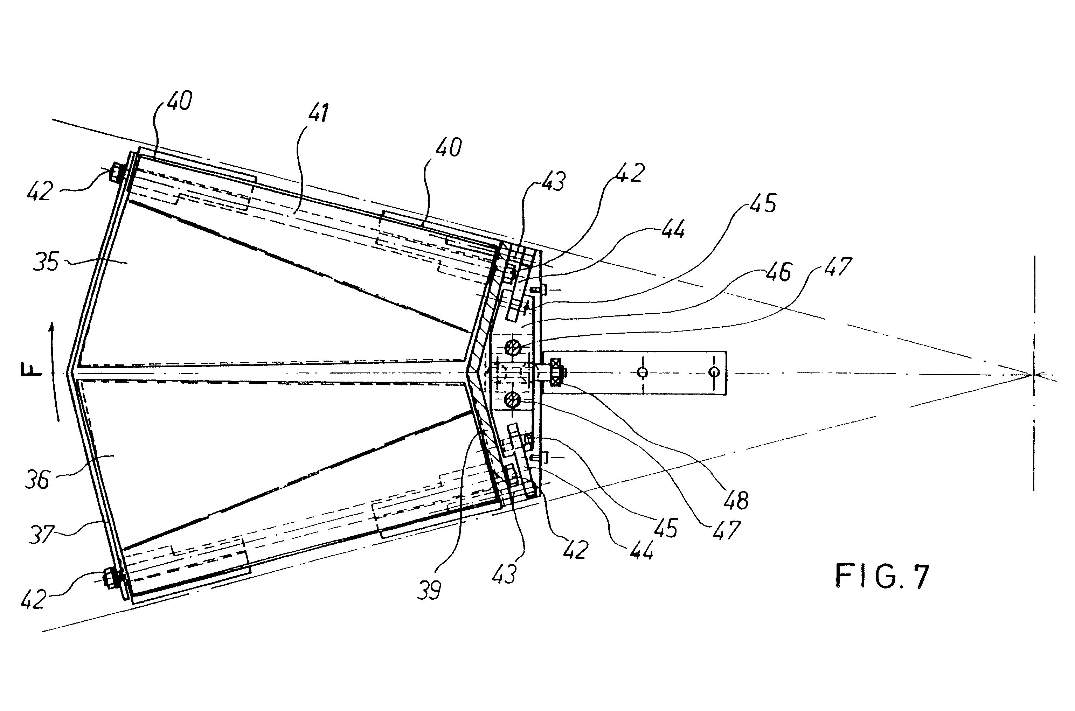

The rotation of the series of troughs 5, as previously described, takes place in the sense of the arrow F (Figure 7). Nevertheless, said series of troughs 5 should be displaced linearly and also according to a broken or mixed trajectory, i.e. composed of right and curved sections, even though the circular trajectory seems the more convenient, in particular because of the minimum space occupied and because of the relative simplicity of this solution in the mechanical aspect.

Each pivotal side wall 35 and 36 has mounted to its outer surface, two blocks 40 or the like, aligned and traversed by rod 41 in its turn fixed at its ends and by means of corresponding nuts 42 to the outer wall 37 of the trough 5 and to the vertical wall of the piece 39. The rod 41 is disposed approximately in radial position in relation to the vertical rotational axis 34 of the assembly and, in this case, in a parallel position to ideal radius, as is shown in Figure 7, allowing the described arrangement to pivot each of the side walls 35 and 36. The pivot rod 41 of each of said walls is fixable at one end only, resting in overhang form, if the mechanical and resistance conditions permit it.

Each of the pivotal side walls 35 and 36 has fixed in its internal block or more approximate to the rotation vertical axis 34 a shaft 43 mounted in overhanging form and extending towards said axis, which overhanging shaft 43 is situated in a higher level than the rod 41, said overhanging shaft 43 penetrating in the hollow portion delimited by the piece 39, passing through a corresponding opening (not illustrated) provided in the vertical portion of the "C" shaped piece 39. Each overhanging shaft 43 is hinged to the end of a respective link 44 which in turn and by a pin 45 is hinged to a vertically displaceable piece 46, in this case along two vertical rods 47 which serve to guide said piece 46, the two rods 47 being fixed at their ends between the two horizontal branches of the "C" shaped piece 39 whereby the displaceable piece 46 has vertical through openings traversed by the respective vertical rods 47. It may be utilized only a single vertical guide rod 47 or also more of two of said rods, according to the mechanical conveniences and requirements.

The rod 41 and shaft 43 can be arranged in a horizontal position or proximate to the same, although they may be situated in another convenient inclination. In the ends of the vertical rods 47 can be arranged shock absorber means for the displacement in the upper and lower ends of the stroke of the displaceable piece 46, thereby being obtained also the suppresion of noise produced by virtue of the shock of said displaceable piece with the upper and lower branches of the "C" shaped piece 39, and also may dispose means in order to diminish the friction between the displaceable piece 46 and said rods 47.

The opening provided in the vertical portion of the "C" shaped piece 39 should be the way that it allows the movement of each overhanging shaft 43 traversing said piece. The vertically displaceable piece 46 has in its rear part or more proximate to the rotational axis 34 connected a free wheel 48 the axis of which is essentially horizontal and radial, which wheel 48 will be operated, through the corresponding cams 14 and 15, selectively by the weighing machine to determine its rising and lowering, effecting thus and respectively, the opening of its pivotal side walls 35 and 36 or the closing of same.

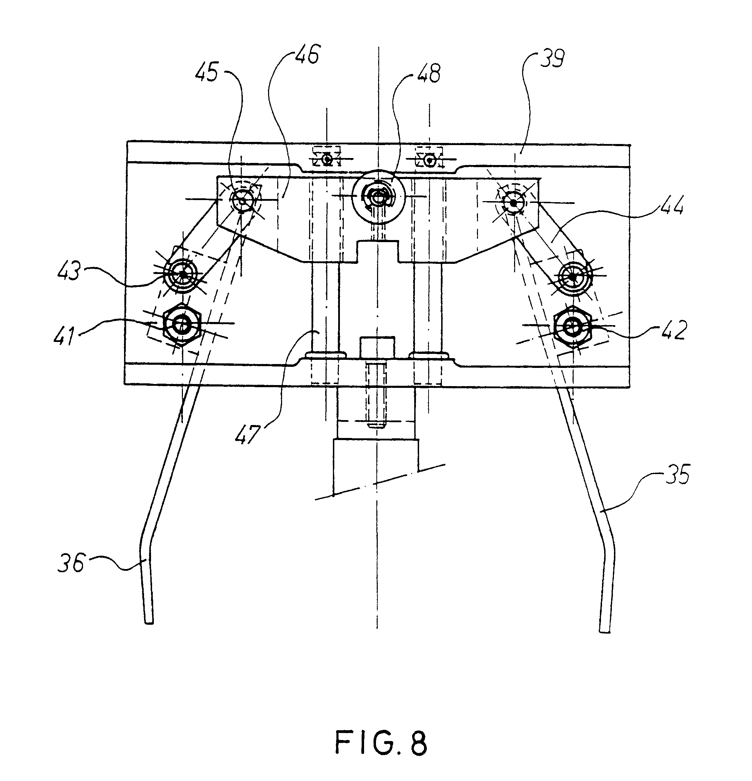

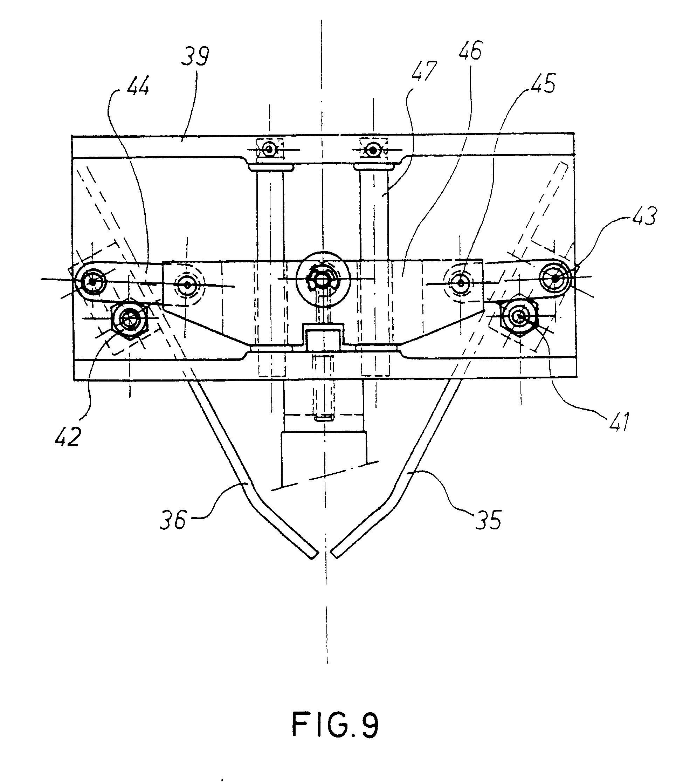

When the displaceable piece 46 is moved, through the free wheel 48 according to the previously described, to its upper position (see Figure 8) is produced the pivotal movement of the two side walls 35 and 36 on rods 41, which said walls are separate from each other, this corresponding to the opened trough position for the discharge of the product contained in same, and when said displaceable piece 46 is forced to descend and it reaches its lower position (see Figure 9) is obtained the closed trough position in order to contain or receive the product, in which lower position the geometric center of the overhanging shaft 43 is situated, in this example and preferably, in a level of hight slightly higher in relation to the geometric center of the pin 45 for the articulation between the link 44 and the displaceable piece 46, a certain retention effect in said closed position of the trough is obtained, which favours and secures said position, avoiding that the walls 35 and 36 of the trough 5 open in any case inappropriately, i.e. without being actuated by the free wheel 48 in the described way.

It may be convenient to dispose, in the internal faces of the pivoted side walls of the trough 5, strips, pads, or the like, in order to attenuate the noise during the discharge of the products into the troughs receiving them and for other purposes. Likewise, the free wheel 48 can be replaced by other slide and buffer means, like sliders etc.

The automatic discharge trough of the invention has, among others, the advantages of an automatic and safe operation, as for the opening of its walls, as well as for its closing, i.e. for the discharge position of the product contained therein in that moment and for its subsequent filling disposition of said trough.

## Claims

Automatic discharge trough for a weighing machine comprsing a plurality of said troughs, preferably circularly arranged in a horizontal plane, said series moving on a circular path around a central vertical axis, and in particular for an automatic weighing machine according to claim 1, characterizedinthat at least one of its two side walls is pivotally mounted in a first essentially horizontal axis arranged approximately radially and supported preferably at both ends thereof, the rear of which is mounted at a piece, the vertical section of which is "C" shaped, to which pivotal wall is connected, in overhanging manner and by its rear part or more proximate to the vertical rotational axis, a second axis essentially horizonzally situated in a level higher than the first axis and extending backwards, protruding into the hollow portion of said "C" shaped piece cough an opening, said second axis being articulatedly connected to the end of a link hinged at its other end to a piece vertically displaceable along at least one vertical guide rod fixed at its ends between the two vertical branches of the "C" shaped piece and traversing a corresponding vertical trough opening in the displaceable piece; and in that the shape of said opening of the "C" shaped piece allows the movement of the second axis, produced by virtue of its connection, through the link, to the displaceable piece, which is operated by suitable means provided in the weighing machine, with the aid of a free wheel, the axis of which is essentially horizontal and radial and connected to said displaceable piece in its rear part, the closed trough position (in order to retain or receive products) being attained when the displaceable piece is in its lower position, in which the geometric center of the second axis is situated, preferably, in a level slightly higher with respect to the geometric center of the pivot axis of articulation between the displaceable piece and the link, whereas the open trough position (for discharging the contained product) being attained in the upper position of the displaceable piece.

## FIG.1

FIG.2

FIG. 3a

FIG. 3b

FIG.4

FIG. 5

EP 0 432 667 A2

FIG.6

EP 0 432 667 A2

FIG. 7

EP 0 432 667 A2

FIG. 8

FIG.9